# EUROPEAN PATENT APPLICATION

(11) **EP 0 587 510 A2**
(43) Date of publication of application: **16.03.1994**
(21) Application number: 93420356.3
(22) Date of filing: 06.09.1993
(51) Int. Cl.: H04N 3/233

(54) **CRT scan system using a lookup table**

(30) Priority: 11.09.1992 US 943961
(71) Applicant: EASTMAN KODAK COMPANY, Rochester, New York 14650-2201 (US)
(72) Inventor: Kresock, John Michael, Eastman Kodak Company, Rochester, New York 14650-2201 (US)
(74) Representative: Buff, Michel

(57) **Abstract**

Fast scan and slow-scan deflection circuits are provided for a cathode ray tube for use in a printer application. The CRT is operated in the raster scan mode and uses a precision electromagnetic deflection yoke. The geometric distortion requirement of a very stringent maximum of 1% is accomplished by using lookup tables with electrically programmable memories that are used to provide the precise scan voltage for any location on the CRT.

## Description

### BACKGROUND OF THE INVENTION

When used to generate photographic quality images, cathode ray tube scan systems traditionally have problems producing good scan linearities. As a result, the resulting photographs are distorted in that elements at the edges of the scanned images are larger than identical elements at the center of the image. It is known that such distortions are more noticable, and thus more objectionable, in hard copy images, e.g. still photographs, than they are in moving images such as television images.

Prior CRT scan systems use a flyback scan circuit in which the horizontal deflection current is switched near the middle of the image from flowing through the damper diode to flowing through the output transistor. This gives rise to an abrupt geometric linearity distortion that is difficult to correct and that is in the most noticeable,central part of the picture. As an example, geometric linearity distortion on home television receivers is typically in the range of 5% to 10%. In photographic printing applications, the raster image linearity requirement is that distortion be limited to a maximum of 1%.

### SUMMARY OF THE INVENTION

This invention is a very linear cathode ray tube deflection circuit that uses linearity correcting lookup tables and linear deflection amplifier designs to achieve the 1% geometric distortion requirement.

This system also produces extremely accurate fast and slow scan rates by deriving them from a crystal controlled oscillator.

According to one aspect of the present invention a method of generating an accurate linear scan in a cathode ray tube is provided which comprises the steps of: addressing a horizontal lookup table to generate a predetermined digital scan waveform output, applying the scan waveform output to a horizontal winding of the cathode ray tube deflection yoke, and resetting the lookup table.

According to another aspect of the present invention, a method of generating an accurate linear scan in a cathode ray tube is provided comprising the steps of: generating a high frequency clock signal and passing the signal through a counter to produce a fast horizontal scan frequency signal. A sync signal is provided to reset the counter and to reset a horizontal lookup table to set the table to the start of horizontal scan. The horizontal sync signal is changed to initiate the horizontal scan and the counter output is addressed to the horizontal lookup table to clock out a predetermined digital scan waveform. The digital scan waveform is converted to an analog signal which is applied to a horizontal winding of the cathode ray tube deflection yoke whereby the predetermined waveform is provided by said horizontal lookup table. The horizontal sync signal is then changed to reset the counter and the lookup table.

According to a further aspect of the present invention, apparatus is provided for generating an accurate linear scan in a cathode ray tube comprising a high frequency clock, a counter, a lookup table and amplifiers. Means is provided for passing the clock signal through the counter to produce a fast horizontal scan frequency signal. Means for generating a sync signal is provided to reset the counter and to reset the horizontal lookup table to set the table to the start of horizontal scan. The horizontal sync signal is changed to initiate the horizontal scan and the counter output is addressed to the horizontal lookup table to clock out a predetermined digital scan waveform. Means is provided to convert the digital scan waveform to an analog signal and for applying it to a horizontal winding of the cathode ray tube deflection yoke whereby the predetermined waveform is provided to the CRT by the horizontal lookup table.

According to yet another aspect of the present invention, apparatus is provided for generating an accurate linear scan in a cathode ray tube comprising a high frequency clock, a horizontal counter, a vertical counter, a horizontal lookup table, a vertical lookup table, and amplifiers. Means is provided for passing the clock signal through the horizontal and the vertical counters to produce a fast horizontal scan frequency signal and a vertical scan frequency signal. Means is provided for generating a sync signal to reset the counters and to reset the lookup tables to set the tables to the start of scan. The sync signal is changed to initiate the scan, and the counter outputs are addressed to the lookup tables to clock out predetermined digital horizontal and vertical scan waveforms. Means are provided to convert the digital scan waveforms to analog signals and for applying them respectively to a horizontal winding of the cathode ray tube deflection yoke and to a vertical winding of the cathode ray tube deflection yoke whereby the predetermined waveforms are provided to the CRT by the lookup tables.

The invention will be better understood from the following more detailed description taken with the accompanying drawings and claims.

### Brief Description of the Drawings

FIG. 1 is a block diagram of a scanning and focusing system for a CRT printer according to the present invention;
FIG. 2 is a schematic diagram of a horizontal scanning circuit of the present invention;
FIG. 3 is graphic illustration of the horizontal scan voltage waveform provided by the present invention; and
FIG. 4 is a schematic diagram of a vertical scanning circuit of the present invention.

### DETAILED DESCRIPTION OF A PREFERRED EMBODIMENT

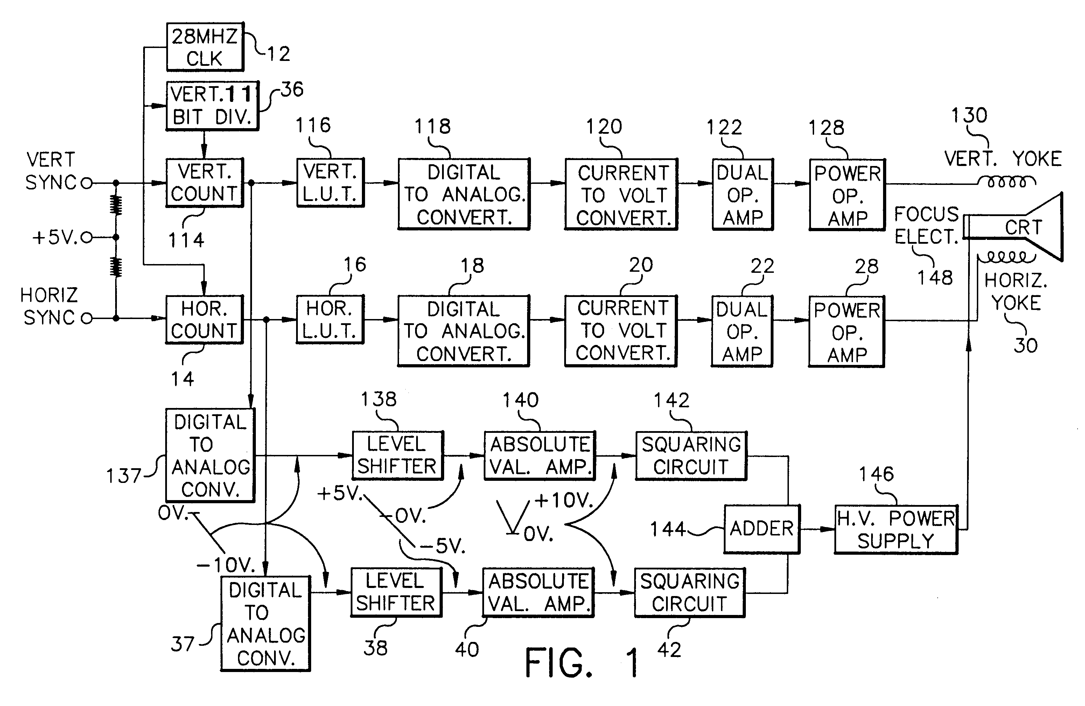

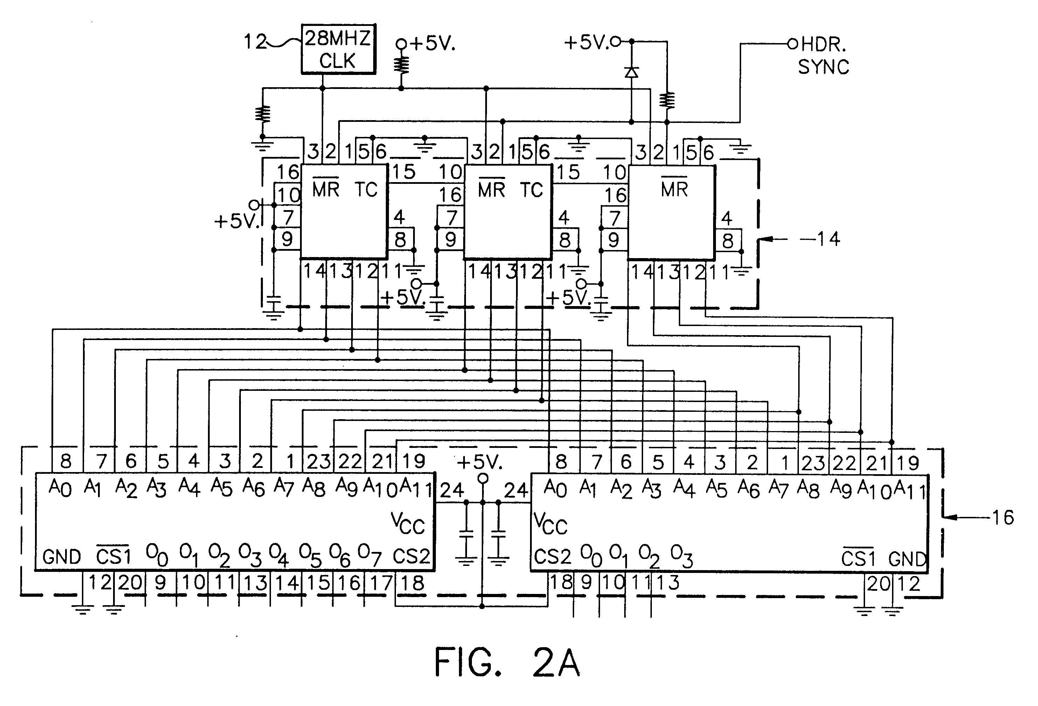

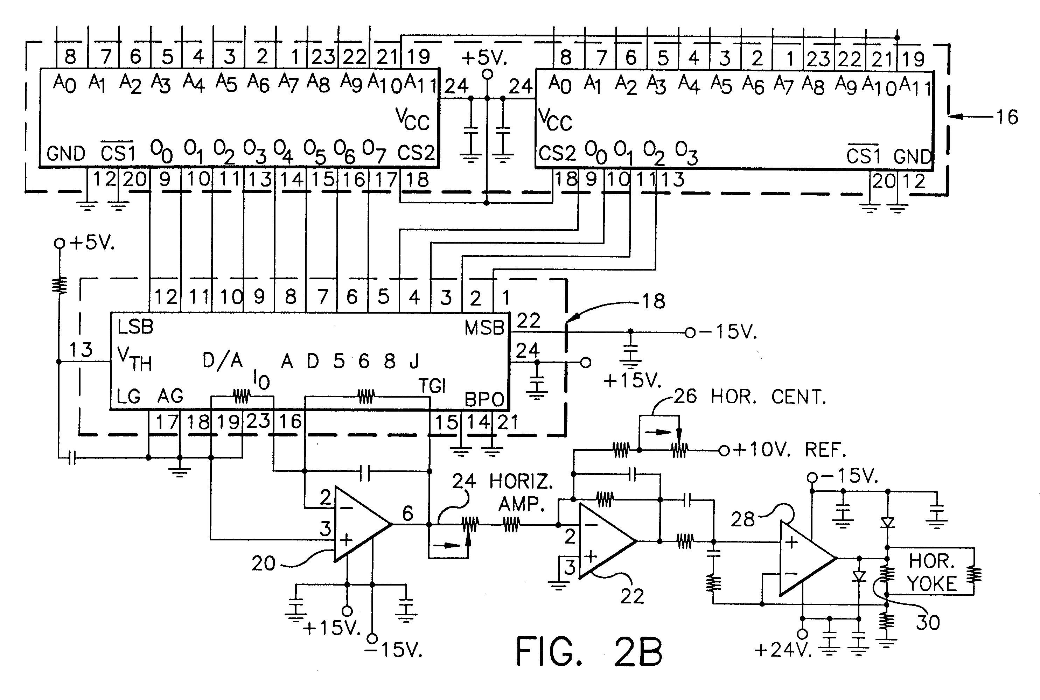

Referring to Fig. 1, a block diagram of the present invention is shown, and includes a high frequency clock 12, operating at a frequency of, for example, 28 MHZ, which outputs to a horizontal 12-bit counter 14 that counts through a 4096 count cycle and then starts over. This 12-bit counter, therefore, divides the 28 MHZ clock signal by 4096 to produce a fast scan free run cycle frequency of 6.836 KHZ. The counter 14 output addresses a horizontal lookup table 16 and clocks out a digital scan waveform stored therein. The horizontal lookup table requires a size of 4096 x 12 addresses and can use conventional devices, examples of which are illustrated in the schematic shown in Fig. 2, each of which have a 4096 x 8 architecture. Therefore, two electrically programmable memory devices, or EPROMS, 16 are needed; the entire 4096 x 8 memory of one, and 4096 x 4 memory of the other. The lookup tables have 4096 time steps per scan cycle as well as 4096 different scan current levels programmed into them. Therefore, these circuits produce virtually analog horizontal deflection currents.

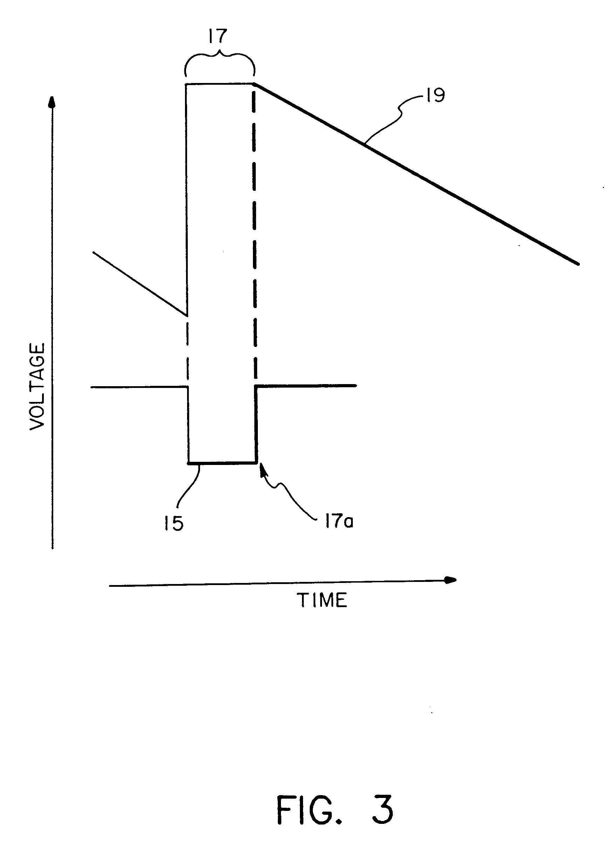

A low (for example, zero in the specific system illustrated) horizontal sync signal is provided to the horizontal scan circuit to reset the 12-bit horizontal counter 14 before a count of 4096 is reached. As the counter is reset to a zero count the horizontal look-up-table is reset to the starting current level for a horizontal scan. The length of time that the horizontal sync signal is held low determines the time allocated for horizontal retrace. (See FIG. 3). When the horizontal sync signal goes from low to high (e.g. +5v.) a horizontal scan begins. The output signal from the horizontal lookup table 16 goes to a digital-to-analog converter 18 (such as an AD568J digital-to-analog converter) to be returned to the analog domain. The current output from the converter 18 is fed to a current to voltage converter 20, such as an LF411CN, which produces a voltage signal output. The voltage output is then fed to one half of a dual operational amplifier 22, such as a LF412CN, which is used in conjunction with two potentiometers, 24 and 26, to adjust both the amplitude and the DC operating point of the scan voltage waveform. The horizontal amplitude control works in such a way that the beginning edge of horizontal scan does not change with amplitude control adjustment. This feature enables noninteractive production set-up of the amplitude and centering controls. (The vertical scan has this same feature.) The output from this section of the LF412CN is applied to the noninverting input of, for example, an LM12CLK power operational amplifier 28, which in turn drives the horizontal winding 30 of the CRT deflection yoke. The horizontal deflection yoke current is directly proportional to the voltage applied to the noninverting input of the power operational amplifier 28 except during retrace. Therefore, precise control of the horizontal scan profile can be achieved by shaping the horizontal scan waveform in the horizontal lookup table.

The high frequency clock signal components of the horizontal scan signal are suppressed by two single pole low-pass filters that each have a corner frequency of approximately 160 KHZ. This provides a 12 dB per octave roll-off in amplitude for signal components above 160 KHZ. The output amplifier 28 also rolls off signals above 100 KHZ. Because the fundamental horizontal scan frequency is 6.836 KHZ, the above-mentioned roll-offs do not significantly affect the shape of the scan waveform.

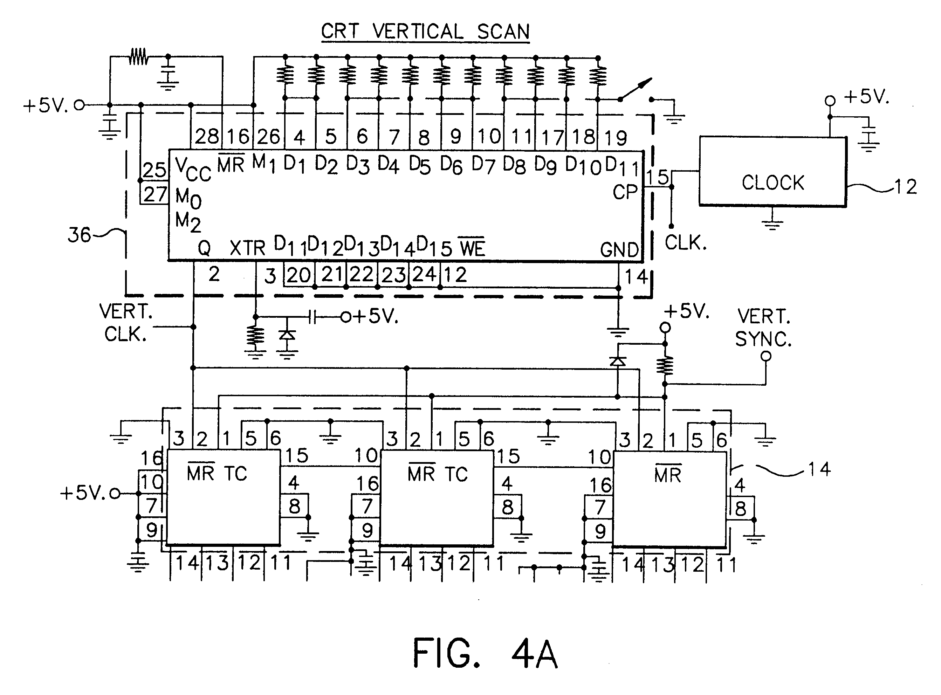

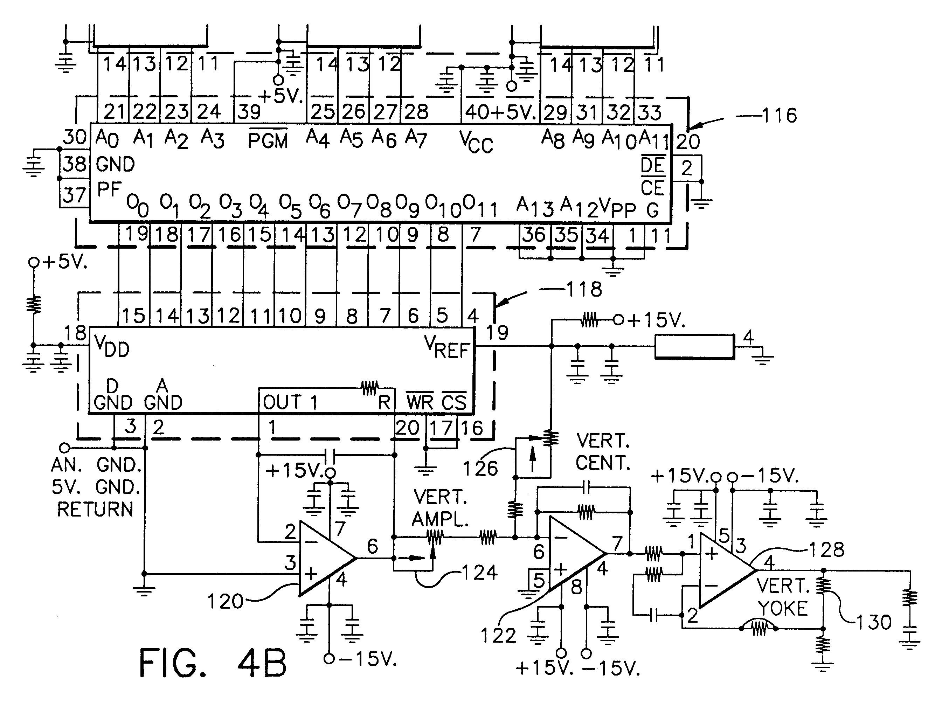

Referring now to FIG. 4 for the vertical scan circuit, the output from the high frequency clock 12 also goes to an 11 bit divider 36 that is switch settable to divide the signal by a number which is equal to the total number of horizontal lines in a complete vertical scan cycle. In the preferred embodiment, 1024 active horizontal scan lines are employed for each vertical scan plus a period of time equal to 10 horizontal scan lines for vertical retrace. The 11 bit divider is thus set to further divide the high frequency signal by 1034. This produces a slow scan vertical frequency of 6.611 HZ. The remainder of the vertical scan circuit is similar to the horizontal scan circuit and are given the same reference numbers as those used for the similar components in the horizontal scan circuit with the prefix "1". The vertical lookup table, however, is a single 16K x 16, such as a 27C202 EPROM integrated circuit, and the corner frequency for the low-pass filters is approximately 1.3 kilohertz instead of 160 KHZ. Another difference between the horizontal and vertical scan circuits is that the vertical power operational amplifier 128 (LM675T) requires +15V. and -15V instead of the +24V required for the horizontal output. The +24 V is needed in the horizontal scan circuit to speed up the horizontal retrace by providing more retrace voltage to reverse the yoke current more quickly.

Ideal focus voltage for the focus element of a flat face electrostatic focus cathode ray tube is different at different positions in the raster. A dynamic focus circuit is provided which interfaces with the cathode ray tube scan system described above. This focus circuit uses the horizontal and vertical scan counter outputs as input signals. These signals are taken from the outputs of the counters 14 and 114. These input signals are passed through digital to analog converters, 37 and 137, and the outputs therefrom are delivered to level shifter circuits 38 and 138 to change the ramp voltage excursions from 0V./-10V. to -5 V./+5 V. with 0 V. indicating the middle of horizontal and vertical scan. The outputs of the level shifter circuits are inputted into absolute value amplifiers 40 and 140 that produce the same positive output voltage when the input signal is positive or negative an equal voltage value. The outputs of the absolute value amplifiers are fed to squaring circuits 42 and 142 that produce horizontal and vertical parabolic current signals that are then summed at the current summing circuit 144. The output of the summing circuit is a parabolic horizontal and vertical voltage signal that is sent to the dynamic focus input of a dynamic focus high voltage power supply 146 that drives the focus electrode 148 of the cathode ray tube.

Flat face electrostatic focus cathode ray tubes require different focus voltages at different distances from the center of the tube face. A dynamic focus correction voltage signal is thus beam position on the cathode ray tube face which allows the proper correction voltages to be produced at each position on the cathode ray tube face. The present dynamic focus correction circuit is significantly less expensive than the analog correction integrated circuit design previously used.

With the use of the divider between the high frequency clock and the vertical counter, the ratio of the horizontal scan rate to the vertical scan rate is established. That ratio remains constant regardless of the frequency of the high frequency clock. Thus, the overall speed of the system may be varied, i.e. to increase the speed to enhance the productivity, or to match the data rate of the input data, without necessitating any changes in the circuitry other than the change of the frequency of the high frequency clock.

Various protective circuits are also provided for the present scanning circuits. For example, a loss of scan circuit may be provided to protect the CRT against spot burn should either the horizontal or the vertical scan circuits fail. This loss of scan circuit feeds the scan waveform voltage to a voltage follower and then to a peak-to-peak scan voltage detector. If the scan voltage is determined to be too low, a blanking signal is sent to the CRT. Also, the possibility of the CRT being spot burned should the anode current be turned on with the vertical and horizontal sync signals at the counter reset levels can be prevented by AC coupling the sync signals and applying them to the counter clear terminals. This allows the counters to continuously count the clock signal and produce a free running scan condition.

### Alternative Embodiment

It will be appreciated that, while the preferred embodiment refers to CRT systems employing deflection yokes to produce the scanned image, the present invention can be employed in electrostatic CRT scan systems by substituting suitable higher voltage amplifiers for those described above.

It is appreciated and understood that the specific embodiments of the invention described hereinabove are merely illustrative of the general principles of the invention. Various modifications may be made by those skilled in the art which are consistent with the principles set forth.

## Claims

1. The method of generating an accurate linear scan in a cathode ray tube comprising the steps of: addressing a horizontal lookup table to generate a predetermined digital scan waveform output, applying said scan waveform output to a horizontal deflection means of said cathode ray tube, and resetting said lookup table.

2. The method of generating an accurate scan in a cathode ray tube comprising the steps of: addressing a vertical lookup table to generate a predetermined digital scan waveform output, applying said scan waveform output to a vertical deflection means of said cathode ray tube, and resetting said lookup table.

3. The method of generating an accurate linear scan according to claim 1 including the steps of addressing a vertical lookup table to generate a predetermined digital vertical scan waveform output, applying said scan waveform output to a vertical deflection means of said cathode ray tube, and resetting said lookup table.

4. The method of generating an accurate linear scan in a cathode ray tube comprising the steps of: generating a high frequency clock signal and passing said signal through a counter to produce a fast horizontal scan frequency signal, providing a sync signal to reset said counter and to reset a horizontal lookup table to set said table to the start of horizontal scan, changing the horizontal sync signal to initiate the horizontal scan and addressing the counter output to said horizontal lookup table to clock out a predetermined digital scan waveform, converting said digital scan waveform to an analog signal, and applying said analog signal to a horizontal deflection means of said cathode ray tube whereby said predetermined waveform is provided by said horizontal lookup table, and resetting said horizontal sync signal to reset said counter and said lookup table.

5. The method of generating an accurate linear scan according to claim 4 including the steps of addressing a vertical lookup table to generate a predetermined digital scan waveform output, applying said scan waveform output to a vertical deflection means of said cathode ray tube, and resetting said lookup table.

6. The method of generating an accurate linear scan in a cathode ray tube according to claim 4 including the steps of: passing said clock signal through a vertical counter to produce a vertical scan frequency signal, providing a sync signal to reset said vertical counter and to reset a vertical lookup table to set said table to the start of vertical scan, changing the vertical sync signal to initiate the vertical scan and addressing the vertical counter output to said vertical lookup table to clock out a predetermined digital vertical scan waveform, converting said digital vertical scan waveform to a vertical analog signal, and applying said vertical analog signal to a vertical deflection means of said cathode ray tube whereby said predetermined waveform is provided by said vertical lookup table, and resetting said vertical sync signal to reset said vertical counter and said vertical lookup table.

7. The method of generating an accurate linear scan in a cathode ray tube comprising the steps of: generating a high frequency clock signal and passing said signal through a counter to produce a vertical scan frequency signal, providing a sync signal to reset said counter and to reset a vertical lookup table to set said table to the start of vertical scan, changing the vertical sync signal to initiate the vertical scan and addressing the counter output to said vertical lookup table to clock out a predetermined digital vertical scan waveform, converting said digital scan waveform to an analog signal, and applying said analog signal to a vertical deflection means of said cathode ray tube whereby said predetermined waveform is provided by said vertical lookup table, and resetting said vertical sync signal to reset said vertical counter and said vertical lookup table.

8. Apparatus for generating an accurate horizontal linear scan in a cathode ray tube having a horizontal deflection means comprising a high frequency clock, a counter, a lookup table and means for passing the clock signal through said counter to produce a fast horizontal scan frequency signal, means for generating a sync signal is provided to reset said counter and to reset said lookup table to set the table to the start of horizontal scan, means for changing said horizontal sync signal to initiate the horizontal scan whereby said counter output is addressed to said lookup table to clock out a predetermined digital scan waveform, means for converting said digital scan waveform to an analog signal and for applying said analog signal to said horizontal deflection means of said cathode ray tube whereby said predetermined waveform is provided to the CRT by said horizontal lookup table.

9. Apparatus according to claim 8 for generating an accurate linear scan in a cathode ray tube having a vertical deflection means comprising a vertical counter, a vertical lookup table and means for passing the clock signal through said vertical counter to produce a vertical scan frequency signal, means for generating a sync signal is provided to reset said vertical counter and to reset said vertical lookup table to set said vertical table to the start of vertical scan, means for changing said vertical sync signal to initiate the vertical scan whereby said vertical counter output is addressed to said vertical lookup table to clock out a predetermined digital vertical scan waveform, means for converting said digital vertical scan waveform to a vertical analog signal and for applying said vertical analog signal to said vertical deflection means of said cathode ray tube whereby said predetermined vertical scan waveform is provided to the CRT by said vertical lookup table.

10. Apparatus for generating an accurate linear scan in a cathode ray tube having horizontal and vertical deflection means comprising a high frequency clock, a horizontal counter, a vertical counter, a horizontal lookup table, a vertical lookup table, means for passing said clock signal through said horizontal and vertical counters to produce a fast horizontal scan frequency signal and a vertical scan frequency signal, means for generating a sync signal to reset said counters and to reset said lookup tables to set said tables to the start of scan, means for changing said sync signal to initiate said scan and said counter outputs are addressed to said lookup tables to clock out predetermined digital horizontal and vertical scan waveforms, means for converting said digital scan waveforms to analog signals and for applying said analog signals respectively to said horizontal deflection means of said cathode ray tube and to said vertical deflection means of said cathode ray tube whereby said predetermined waveforms are provided to said CRT by said lookup tables.

11. The invention according to claim 10 wherein low pass filters are provided to eliminate the high frequency components of said scan waveforms.

12. The invention according to claim 10 including a loss of scan circuit comprising a voltage follower, a peak-to-peak scan voltage detector, and means to determine low scan voltage and to gererate a blanking signal which is supplied to said cathode ray tube.

13. The invention according to claim 10 including means for AC coupling said sync signals to the clear terminals of said counters to permit the counters to continuously count the clock signal and produce a free running scan condition.

14. The invention according to claim 10 including signal divider means disposed between said high frequency clock and said vertical counter which establishes the ratio between said horizontal scan frequency and said vertical scan frequency.
